# EUROPEAN PATENT SPECIFICATION

(11) **EP 2 860 487 B1**
(45) Date of publication and mention of the grant of the patent: **22.01.2020**
(21) Application number: 14188436.1
(22) Date of filing: 10.10.2014
(51) Int. Cl.: G01B 3/56, E06B 3/00, E04D 13/03, G01B 3/30

(54) **A measuring tool for preparation of a window lining, an installation kit comprising such a measuring tool, and a method for preparation of a window lining**
Messinstrument zur Herstellung einer Fensterauskleidung, Installationskit mit dem Messinstrument und Verfahren zur Herstellung einer Fensterauskleidung
Instrument de mesure pour la préparation d'un habillage de fenêtre, kit d'installation comprenant un tel outil de mesure et procédé de préparation d'un habillage de fenêtre

(30) Priority: 10.10.2013 DK 201300157 U; 28.02.2014 DK 201470099
(43) Date of publication of application: 15.04.2015
(73) Proprietor: VKR Holding A/S, 2970 Hørsholm (DK)
(72) Inventor: Atzen, Bent, 8700 Horsens (DK); Ansø, Bo, 8250 Egå (DK); Nielsen, Thomas Nør, 8700 Horsens (DK)
(74) Representative: AWA Denmark A/S

(56) References cited:
- WO-A1-2013/116915
- GB-A- 2 250 101
- US-A- 1 021 850
- US-A- 4 712 307

## Description

The present invention relates to a measuring tool for preparation of a window lining. The invention furthermore relates to an installation kit comprising such a measuring tool and a set of lining panels, and to a method for preparation of a window lining.

When installing windows in a façade or a roof, it is desirable to make the transition between the window frame and the inner wall of the room of the building smooth and of a pleasant appearance. The transition is most often made up of a so-called window lining having dimensions to span the distance between the inner side of the window frame to the inner wall. In windows installed in a facade, i.e. substantially vertically, the lining is constituted basically of a box-shaped element having two side members, a top member and a bottom member, all being of a substantially rectangular shape and positioned at right angles to the window frame. The members are traditionally formed of panels or plates of such materials as plywood, gypsum or chipboard.

In windows mounted in an inclined roof, the geometry of the lining is more complicated. Basically, the side members are positioned at right angles to the window frame, as in facade windows, but the top member is most often substantially horizontal and the bottom member substantially vertical, or the top and bottom assume other angles with the window frame. A number of grounds for this particular design exist, one being that the horizontal top member allows for an increased influx of light, another that the vertical bottom member makes it possible to access the bottom window and optimise the space of the room. Thus, the top member and the bottom member form an angle other than 90° with the window frame, and the side members have a trapezoidal shape.

The adaptation of the shape of the members of the lining is relatively challenging, as the dimensions of each member rely on factors such as the inclination of the roof and the thickness of the wall. This is even more pronounced in new buildings or in buildings undergoing a complete renovation, in which the inner wall is not yet present, or to be replaced wholly or partly. In those cases, there might thus be no inner wall to start with, and the craftsman is faced with the further challenge of visualising the aperture in the inner wall before or during the installation of such inner wall.

In the prior art, a number of solutions have been proposed to facilitate the installation and reduce the amount of manual adaptation and risk of incorrect installation. Examples are shown for instance in EP 17 399, EP 1 414 567 and EP 287 362.

A measuring tool is devised in international publication No. WO 02/064335. This tool functions well but is limited to correct measurement and cutting-off of the finishing profile lists constituting the lining mouldings.

A further and more recent example is described in EP 2 615 219 A1, in which an installation kit for linings for varying inclinations and wall thicknesses is provided.

Other tools for measuring are known from documents US4712307, WO2013/116915, GB2250101 or US1021850.

Even though the arrangements disclosed in these documents facilitate the mounting and to some extent reduce the risk of incorrect installation, there is still a need for facilitated and fail-safe measurement and subsequent installation of window linings.

With this background it is an object of the invention to provide a measuring tool for the mounting of a window lining, which is easy and uncomplicated to manufacture and use.

In a first aspect, this and further objects are met by a measuring tool for preparation of a window lining to fit between a window frame and an inner wall, comprising an angle element having a first edge adapted for abutment with the window frame and a second edge substantially perpendicular to the first edge, and including an arcuate track, and a ruler element having two side edges and two opposite end edges, and a pin near one end edge, the pin being slidingly accommodated in the arcuate track, the angle element and the ruler element being adapted to be rotated through a predefined angle interval defined by the ends of the track in the angle element to position at least one side edge of the ruler element and the second edge of the angle element at an angle with respect to each other, the angle position of the ruler element relative to the angle element being defined solely by the position of the pin in the arcuate track.

In this manner, a measuring tool is provided by which it is possible to utilize the second edge of the angle element and at least one side edge of the ruler element to mark corresponding cutting lines of the side lining panels. This provides for a facilitated and fail-safe preparation of the window lining, as the cutting lines of the side lining panels are positioned correctly without the need for additional measuring steps. As a further advantage, the measuring tool may be utilized when finishing the opening in the inner wall.

In an advantageous embodiment, the angle element is provided with a first set of indicating means adapted for matching corresponding markings of the lining panel, preferably provided as apertures in the lining panel. In a further development of this advantageous embodiment, the first set of indicating means are formed as protruding pins to match apertures in the lining panel. This makes it possible to easily position the measuring tool correctly on the lining panel when preparing the lining panel itself.

In a presently preferred embodiment, the ruler element is provided with a second set of indicating means adapted for marking apertures on the lining panel. Preferably, the second set of indicating means are formed as apertures in the ruler element. In turn, this makes it possibly to mark the intended apertures in the lining panel by means of a coloured pen or similar. In this manner, preparation of the window lining is facilitated to an ever greater extent, as the holes for accommodating fastening means such as screws are marked in a simple manner.

In a presently preferred embodiment, a straight track is provided in connection with one end of the arcuate track. This makes it possible to expand the field of application of the measuring tool even further. In a development of this preferred embodiment, the pin of the ruler element is accommodated in the straight track to allow the ruler element to assume a position in which one side edge is flush with the second edge of the angle element. This makes it possible to utilize the measuring tool even when preparing linings for windows mounted substantially perpendicularly, typically façade windows.

In an alternative embodiment, the angle element is provided with at least one removable restraining element, which, when inserted in the angle element, defines a first angle interval of the track, and when removed from the angle element, defines a second angle interval of the track, the first angle interval being preferably a subinterval of the second angle interval. In a development of this alternative embodiment, the restraining element comprises a pin, configured to limit the movement of the ruler element in the track, when the pin is inserted in an aperture of the angle element.

In a second aspect, an installation kit comprising such a measuring tool and a set of lining panels is provided.

In a third aspect, a method for preparation of a window lining is devised.

Further embodiments and advantages are set forth in the dependent claims.

In the following the invention will be described in further detail by means of examples of embodiments with reference to the schematic drawings, in which
Figs 1 and 2 are perspective views of a detail of one embodiment of the measuring tool according to the invention when used in the measuring up of a window lining to be mounted in an inclined wall;
Figs 3 to 5 are perspective views of the inclined wall of Figs 1 and 2 during the measuring up;
Figs 6 and 7 are perspective partial views of details of one embodiment of the measuring tool according to the invention when used in the measuring up of the window lining;
Fig. 8 is a perspective view of the window lining during measuring up and preparation;
Fig. 9 is a perspective view of one embodiment of the measuring tool according to the invention during measuring up;
Fig. 10 is a perspective view of the window lining during measuring up and preparation;
Figs 11 and 12 are partial plan views, on a larger scale, of a detail of the measuring tool in an embodiment of the invention, in two different positions;
Fig. 13 shows a partial plan view, on a larger scale, of a detail of the measuring tool in an embodiment of the invention; and
Figs 14 and 15 show partial plan views, on a larger scale, of an alternative embodiment in two different positions.

Referring to the Figures of the drawing, it is shown how a measuring tool 1 in an embodiment of the invention is formed in order to assist in the preparation of a window lining 7 to fit between a window frame 4 and an inner wall 5. The measuring tool 1 comprises two parts, viz. an angle element 2 having a first edge 21 adapted for abutment with the window frame 4 and a second edge 22 substantially perpendicular to the first edge 21, and including an arcuate track 23, and a ruler element 3 having two side edges 31, 32 and two opposite end edges of which only outer free end edge 34 is indicated, and a pin 33 near one, inner end edge, the pin 33 being slidingly accommodated in the arcuate track 23. The arcuate track 23 is provided with a suitable radius of curvature in order to allow a part-circular movement of the pin 33 in the arcuate track 23. As is clearly visible from the drawing figures, the centre of curvature is located at a point along the ruler element 3 and such that the first edge 21 faces the convex side of the arcuate track 23. The angle position of the ruler element 3 relative to the angle element 2 is thus defined solely by the position of the pin 33 in the arcuate track 23, and not by for instance a pivot point.

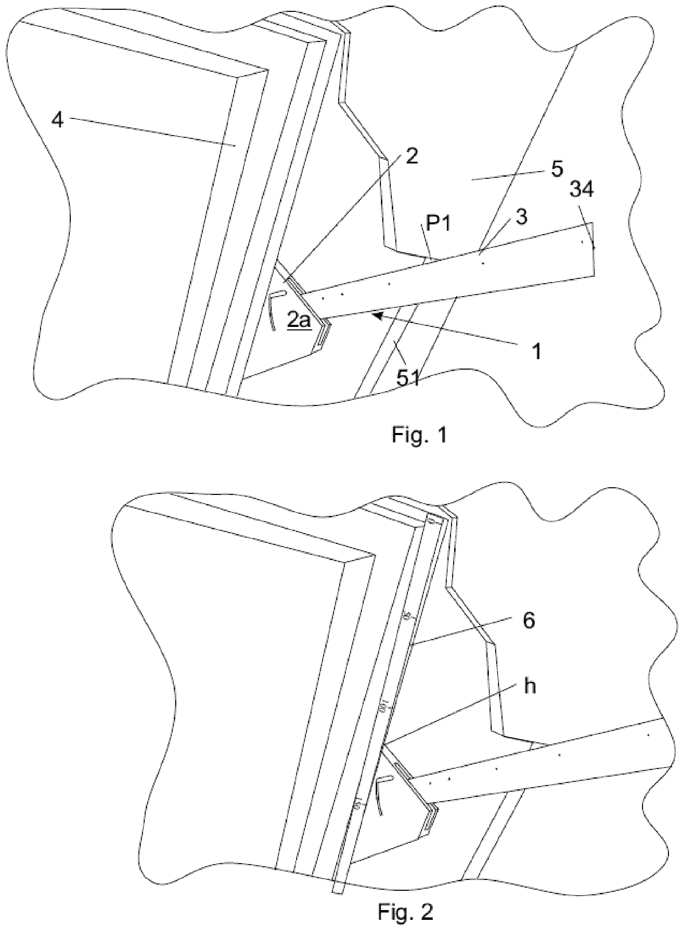

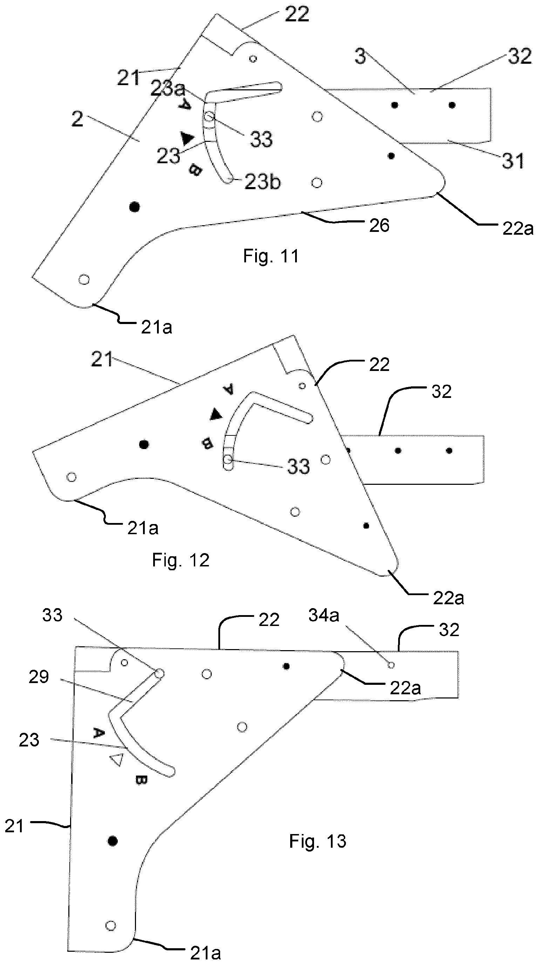

In the embodiment of Figs 1 to 10, the angle element 2 has the general shape of a right triangle with truncated corners, having as its shorter sides first edge 21 and second edge 22, joined by a longer side 26 between truncated corners 21a and 22a. In the embodiment of Figs 11 to 15, the corner sections 21a and 22a have a more rounded shape. It is noted that the first and second edges 21, 22 of the angle element 2 are both depicted as linear, i.e. as straight lines, to fulfil their respective functions during the installation to ensure proper measurement and subsequent cutting. The ruler element 3 has, in the embodiment of Figs 11 to 15, one straight side edge 32 which has a function during the measurement and marking of cutting lines, and one side edge 31 that may for instance be provided with a slightly sinuous pattern in order to improve the fail-safe installation even further, thus indicating that only one side edge is used for marking.

As shown most clearly in Figs 11 and 12, the angle element 2 and the ruler element 3 are adapted to be rotated through a predefined angle interval defined by the ends 23a, 23b of the track 23 in the angle element to position at least one side edge 31, 32 of the ruler element 3 and the second edge 22 of the angle element 2 at an angle with respect to each other. This makes it possible to use the measuring tool 1 in windows installed in roofs having various inclinations, for instance ranging from approximately 30 degrees (Fig. 12) to 60 degrees (Fig. 11). In the installation situation of Figs 1 to 10, the inclination is approximately 50 degrees. In one particular embodiment, the measuring tool may also be utilized for preparation of window linings for installation with windows mounted in a façade, i.e. substantially vertically. This is shown in Fig. 13 and will be described in more detail below.

The measuring tool 1 forms part of an installation kit comprising, in addition to the measuring tool, a set of lining panels. In that way, a complete product is packaged, supplied and sold, for instance as a do-it-yourself product, or for professional installers.

In Figs 1 to 5 it is shown how the measuring tool 1 is first utilized to mark the opening required for the window lining. Whereas is it relatively easy to define the size perpendicular to the window frame 4 as indicated by borderline 51 of the inner wall 5 in Fig. 1, it is a challenging task to define the upper limit of the opening to accommodate the window lining. During the initial preparation of the side borders, the measuring tool 1 may also be used as a drawing rule to assist in the measurement of the distance between the window frame and the intended side border at the respective side.

The measuring tool 1 is positioned with the first edge 21 of the angle element 2 in abutment with the window frame 4. The ruler element 3 is rotated to such an extent that the one side edge of the ruler element 3 is positioned in abutment with point P1 indicating the top of the borderline 51 of Fig.

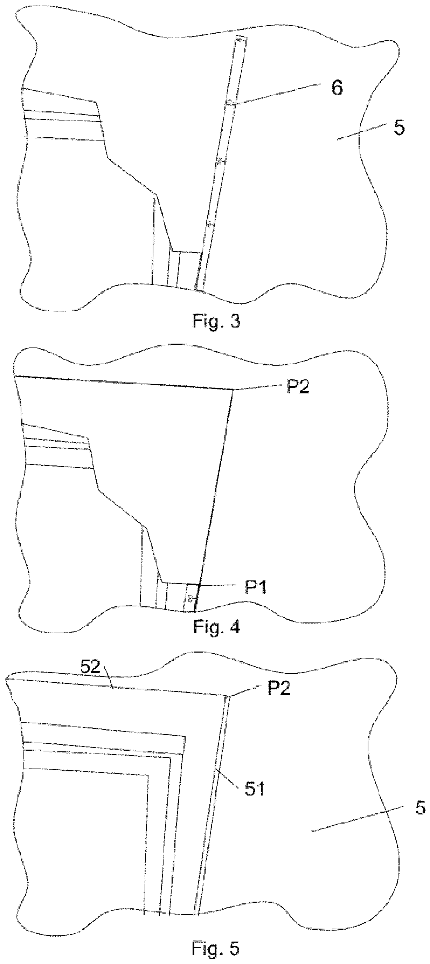

1 and with ruler element 3 in a horizontal position, which is proved by suitable means such as a spirit level. The distance h from the top of the window frame 4 to the second edge 22 of the angle element 2 is measured, here by rule 6, and transferred to the inner wall 5 from point P1 to mark point P2 as shown in Figs 4 and 5. If desired, the measured distance h may be increased by an additional distance such as 10-20 mm in order to allow positioning of a finishing profile frame. The opening is cut by for instance sawing to provide borderlines 51 and 52. The angular position of the ruler element 3 relative to the angle element 2 is retained, and the measuring tool 1 is transferred to the side lining panels.

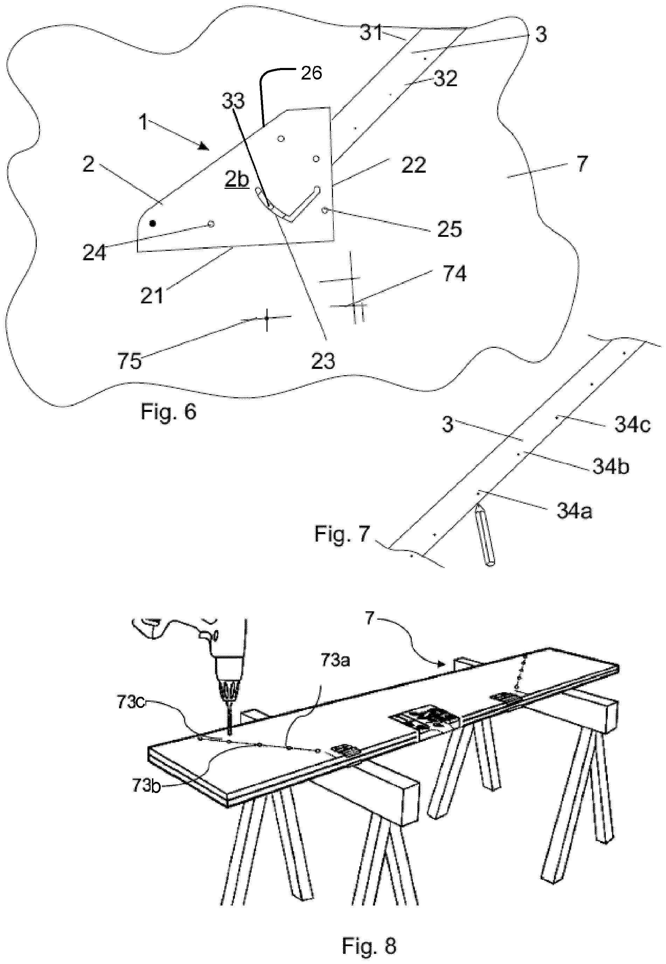

The use of the measuring tool 1 in preparation of the window lining itself, in particular of the side lining panels 7, will be described in further detail with reference to Figs 6 to 10.

In the embodiment shown, the angle element 2 is provided with a first set of indicating means adapted for matching apertures in the lining panel 7 to define the correct position of the measuring tool 1 on the side lining panels 7. The indicating means of the angle element 2 are in the embodiment shown formed as protruding pins 24, 25 to match corresponding markings of the lining panel 7, in the specific embodiment formed as apertures 74, 75 in the lining panel 7, here at the end adapted to form the top end.

Once the measuring tool 1 has been brought to the appropriate position, preparation of the side lining panels 7 is carried out. Here, also the ruler element 3 is provided with a second set of indicating means adapted for marking apertures on the lining panel 7, namely as apertures 34a, 34b, 34c in the ruler element 3 for marking corresponding holes 73a, 73b, 73c in the lining panel 7.

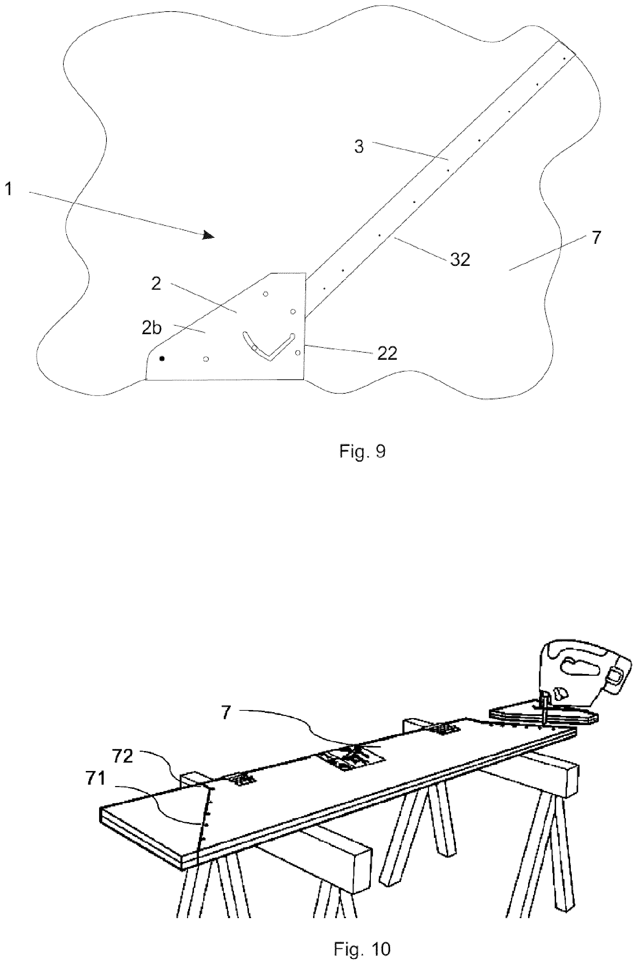

Holes are drilled in the lining panels 7, the side lining panels 7 to the respective side being positioned on top of each other as shown in Figs 8 and 10. Subsequently, the lining panels 7 are cut along the lines 72 and 71 corresponding to the second edge 22 of the angle element 2 and the one side edge 32 of the ruler element 3.

In a corresponding manner, the measuring tool 1 is utilized for measuring and defining the lower border of the inner wall, by applying the ruler element 3 in a vertical position by allowing the pin 33 of the ruler element 3 to slide in the arcuate track 23 of the angle element 2. The measuring tool 1 is then again transferred to the side lining panels 7 at the end adapted to form the bottom. The measuring tool 1 is brought to its appropriate position by matching the indicating means of the angle element 2 with the counterpart holes (or other marking) on the side lining panels 7.

The measuring tool 1 may in principle be formed in any suitable manner and in any material suitable for fulfilling the purpose. However, the measuring tool 1 is normally provided with the window panels and is possibly disposed of after use. Thus, an environmentally sustainable solution is preferred, allowing the measuring tool to be recycled. The angle element 2 may for instance comprise a front sheet 2a and a back sheet 2b of a wooden or plastic material and the ruler element 3, likewise of a wooden or plastic material, is inserted between the front sheet 2a and the back sheet 2b. The angle element 2 may also comprise other elements, such as spacer elements inserted between the front sheet 2a and the back sheet 2b, and other elements assisting in the guiding or blocking of the movement of the ruler element 3 relative to the angle element 2.

In order to ensure proper handling of the measuring tool, the front sheet 2a, the second sheet 2b and/or the ruler element 3 may comprise means for increasing the friction between them. This makes it possible to maintain the measured position, at least temporarily. The ruler element 3 is in principle kept in its angular position relative to the angle element 2 by the pin 33 accommodated in the arcuate track 23, and in the embodiment described in the above, this position may be maintained by pressing the front sheet 2a and the back sheet 2b together.

In the embodiment of Figs 11 to 15, it is noted that an additional marking in the form of letters A and B are present off the respective ends of the arcuate track 23. This additional marking is intended to ease the installation even further, as the side lining panels 7 may to this end be marked in a corresponding manner with letters A and B to denote the end adapted to be the top and bottom, respectively.

Referring to Fig. 13, a further detail of a preferred embodiment is shown, namely in which a straight track 29 is provided in connection with one end 23a of the arcuate track 23 in the angle element 2. The pin 33 of the ruler element 3 is accommodated in the straight track 29 to allow the ruler element 3 to assume a position in which one side edge 32 is flush with the second edge 22 of the angle element 2. In this manner, the one side edge 32 forms an extension of the second edge 22 of the angle element 2 and extends, in turn, at right angles to the first edge 21 of the angle element 2. The straight track 29 extends at an angle relative to the first edge 21 and the second edge 22 of approximately 45°.

Also in this embodiment and field of application, the ruler element 3 is provided with a second set of indicating means adapted for marking apertures on the lining panel 7, here in the form of apertures 34a, 34b, 34c in the ruler element 3. The translation of the pin 33 in the straight track 29 brings about a translation of the apertures 34a, 34b, 34c to ensure proper marking of the holes for fastening the lining panels.

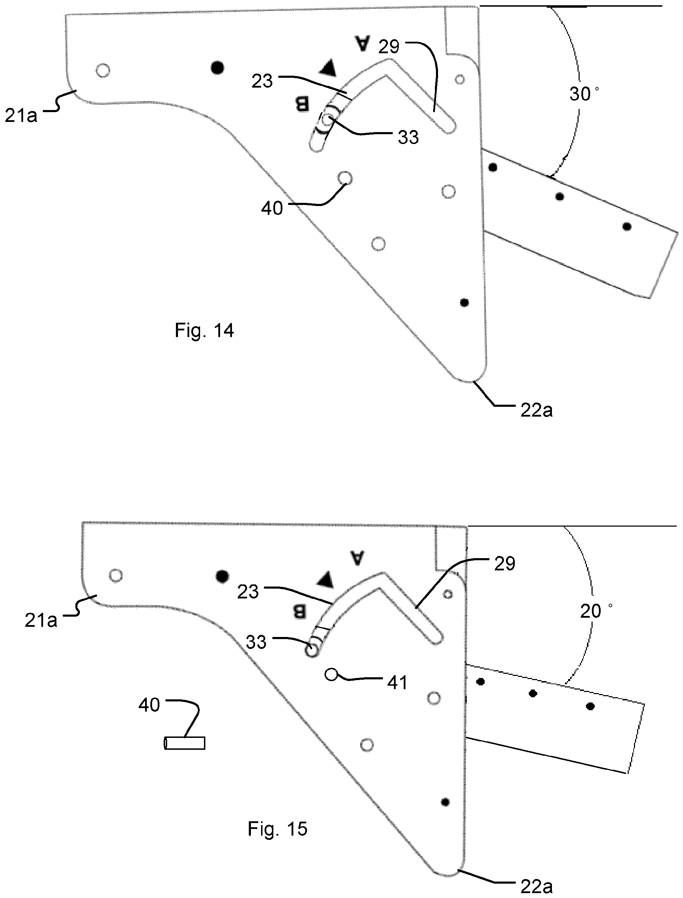

In the alternative embodiment shown in Figs 14 and 15, the angle element 2 is provided with at least one removable restraining element 40, which, when inserted in the angle element 2, defines a first angle interval of the track 23, and when removed from the angle element 2, defines a second angle interval of the track 23, the first angle interval being preferably a subinterval of the second angle interval. In the specific embodiment, the restraining element comprises a pin 40, configured to limit the movement of the ruler element 3 in the track 23, when the pin 40 is inserted in an aperture 41 of the angle element 2, cf. the 30° range in Fig. 14 and the 20° range in Fig. 15, respectively.

The rationale underlying the alternative embodiment resides in the fact that in certain installation situations, it may be advantageous to provide at least two different working positions of the measuring tool. The reason may be to ensure that there is sufficient material in the installation situation in question. As a general rule, lining panels are delivered with pre-defined dimensions. The choice of dimensions typically covers roof and inner wall inclinations in the range 30° to 60°. If the full depth of the product is not required (typically 300-400 mm), combined with a larger or smaller inclination, the restraining element may be removed thereby widening the working area of the inclination in question. With the restraining element in place, the range is limited to the most common inclinations falling within the typical range.

The manner of using the measuring tool according to the invention will be described in the following, in that a method for preparation of a window lining 7 to fit between a window frame 4 and an inner wall 5 is described with reference to the figures of the drawing, the method comprising the following sequence steps of:
a) providing a measuring tool 1 comprising an angle element 2 and a ruler element 3,
b) providing a pin 33 near one end edge of the ruler element 3, said pin 33 being slidingly accommodated in a arcuate track 23 of the angle element 2,
c) positioning a first edge 21 of the angle element in abutment with an inner side of the window frame,
d) rotating the angle element 2 and the ruler element 3 through a predefined angle interval defined by ends 23a, 23b of the track 23 to position at least one side edge 32 of the ruler element 3 and a second edge 22, substantially perpendicular to the first edge 21, of the angle element 2 at an angle with respect to each other, and
e) cutting a lining panel 7 along lines corresponding to the second edge 22 of the angle element 2 and the one side edge 32 of the ruler element 3, so that the lining panel 7 fits between the window frame 4 and the inner wall 5.

In the alternative embodiment of Figs 14 and 15, the additional steps of providing a removable restraining element 40, and inserting the restraining element 40 in an aperture of the angle element 2, and defining with the position the restraining element 40 a first angle interval of the track 23 of the angle element 2 that the ruler element 3 can be rotated through. Optionally, the restraining element 40 is removed, thereby defining a second angle interval of the track 23 that the ruler element 3 can be rotated through.

The invention should not be regarded as being limited to the embodiments shown in the drawings and described in the above. Various modifications and combinations may be carried out within the scope of the appended claims.

## Claims

1. A window lining measuring tool (1) for preparation of a window lining (7) to fit between a window frame (4) and an inner wall (5), comprising
an angle element (2) having a first edge (21) adapted for abutment with the window frame (4) and a second edge (22) substantially perpendicular to the first edge (21), and including an arcuate track (23), and
a ruler element (3) having two side edges (31, 32) and two opposite end edges (34), and a pin (33) near one end edge, the pin (33) being slidingly accommodated in the arcuate track (23),
the angle element (2) and the ruler element (3) being adapted to be rotated through a predefined angle interval defined by the ends (23a, 23b) of the track (23) in the angle element (2) to position at least one side edge (32) of the ruler element (3) and the second edge (22) of the angle element (2) at an angle with respect to each other,
**characterized in that** the angle position of the ruler element (3) relative to the angle element (2) is defined solely by the position of the pin (33) in the arcuate track (23).

2. A window lining installation kit comprising a window lining measuring tool according to claim 1 and a set of lining panels (7).

3. A window lining installation kit according to claim 2, wherein the angle element (2) is provided with a first set of indicating means (24, 25) adapted for matching corresponding markings of the lining panel (7), preferably provided as apertures in the lining panel (7).

4. A window lining installation kit according to claim 3, wherein said first set of indicating means are formed as protruding pins (24, 25) to match apertures (74, 75) in the lining panel (7).

5. A window lining installation kit according to any one of claims 2 to 4, wherein the ruler element (3) is provided with a second set of indicating means (34a, 34b, 34c) adapted for marking apertures on the lining panel (7).

6. A window lining installation kit according to claim 5, wherein said second set of indicating means are formed as apertures (34a, 34b, 34c) in the ruler element (3).

7. A window lining installation kit according to any one of claims 2 to 6, wherein the angle element (2) comprises a front sheet (2a) and a back sheet (2b) and the ruler element (3) is inserted between the front sheet (2a) and the back sheet (2b).

8. A window lining installation kit according to claim 7, wherein the front sheet (2a), the second sheet (2b) and/or the ruler element (3) comprises means for increasing the friction between them.

9. A window lining installation kit according to anyone of the preceding claims, wherein a straight track (29) is provided in connection with one end (23a) of the arcuate track (23).

10. A window lining installation kit according to claim 9, wherein the pin (33) of the ruler element (3) is accommodated in the straight track (29) to allow the ruler element (3) to assume a position in which one side edge (32) is flush with the second edge (22) of the angle element (2).

11. A window lining installation kit according to claim 10, wherein the ruler element (3) is provided with a second set of indicating means (34a, 34b, 34c) adapted for marking apertures on the lining panel (7), preferably in the form of apertures (34a, 34b, 34c) in the ruler element (3).

12. A window lining installation kit according to claim 2, wherein the angle element (2) is provided with at least one removable restraining element (40), which, when inserted in the angle element (2), defines a first angle interval of the track (23), and when removed from the angle element (2), defines a second angle interval of the track (23), the first angle interval being preferably a subinterval of the second angle interval.

13. A window lining installation kit according to claim 12, wherein the restraining element comprises a pin (40), configured to limit the movement of the ruler element (3) in the track (23), when the pin (40) is inserted in an aperture (41) of the angle element (2).

14. A method for preparation of a window lining comprising a set of lining panels (7) to fit between a window frame (4) and an inner wall (5), comprising the following sequence steps of:
a) providing a measuring tool (1) comprising an angle element (2) and a ruler element (3),
b) providing a pin (33) near one end edge of the ruler element (3), said pin (33) being slidingly accommodated in a arcuate track (23) of the angle element (2),
c) positioning a first edge (21) of the angle element in abutment with an inner side of the window frame,
d) rotating the angle element (2) and the ruler element (3) through a predefined angle interval defined by ends (23a, 23b) of the track (23) to position at least one side edge (32) of the ruler element (3) and a second edge (22), substantially perpendicular to the first edge (21), of the angle element (2) at an angle with respect to each other,
e) retaining the angular position of the ruler element (3) relative to the angle element (2), and transferring the measuring tool (1) to the lining panels (7), and
f) cutting the lining panels (7) along lines (72, 71) corresponding to the second edge (22) of the angle element (2) and the one side edge (32) of the ruler element (3), so that the lining panels (7) fit between the window frame (4) and the inner wall (5).

15. The method of claim 14, furthermore including the steps of
providing a removable restraining element (40),
inserting the restraining element (40) in an aperture of the angle element (2)
defining with the position the restraining element (40) a first angle interval of the track (23) of the angle element (2) that the ruler element (3) can be rotated through, and optionally
removing the restraining element (40), thereby defining a second angle interval of the track (23) that the ruler element (3) can be rotated through.

## Patentansprüche

1. Fensterverkleidungsmessinstrument (1) zur Herstellung einer Fensterverkleidung (7), die zwischen einen Fensterrahmen (4) und eine Innenwand (5) einzupassen ist, umfassend:
ein Winkelelement (2), das einen ersten Rand (21), der geeignet ist, an dem Fensterrahmen (4) anzuliegen, und einen zweiten Rand (22), der im Wesentlichen rechtwinklig zu dem ersten Rand (21) verläuft, aufweist, und eine bogenförmige Spur (23) umfasst und
ein Linealelement (3), das zwei Seitenränder (31, 32) und zwei sich gegenüberliegende Endränder (34) sowie einen Stift (33) im Bereich des einen Endrands aufweist, wobei der Stift (33) auf gleitende Weise in der bogenförmigen Spur (23) aufgenommen ist,
wobei das Winkelelement (2) und das Linealelement (3) geeignet sind, durch einen vorgegebenen Winkelabstand gedreht zu werden, der durch die Enden (23a, 23b) der Spur (23) in dem Winkelelement (2) definiert ist, um wenigstens einen Seitenrand (32) des Linealelements (3) und den zweiten Rand (22) des Winkelelements (2) in einem Winkel zueinander zu positionieren,
**dadurch gekennzeichnet, dass** die Winkelposition des Linealelements (3) relativ zu dem Winkelelement (2) ausschließlich durch die Position des Stifts (33) in der bogenförmigen Spur (23) definiert ist.

2. Fensterverkleidungseinbausatz, umfassend ein Fensterverkleidungsmessinstrument nach Anspruch 1 und einen Satz von Verkleidungsplatten (7).

3. Fensterverkleidungseinbausatz nach Anspruch 2, wobei das Winkelelement (2) mit einem ersten Satz von Anzeigemitteln (24, 25) versehen ist, die geeignet sind, mit entsprechenden Markierungen der Verkleidungsplatte (7) übereinzustimmen, die vorzugsweise als Öffnungen in der Verkleidungsplatte (7) bereitgestellt sind.

4. Fensterverkleidungseinbausatz nach Anspruch 3, wobei der erste Satz von Anzeigemitteln als vorstehende Stifte (24, 25) ausgebildet ist, die mit Öffnungen (74, 75) in der Verkleidungsplatte (7) übereinstimmen.

5. Fensterverkleidungseinbausatz nach einem der Ansprüche 2 bis 4, wobei das Linealelement (3) mit einem zweiten Satz von Anzeigemitteln (34a, 34b, 34c) versehen ist, die geeignet sind, Öffnungen auf der Verkleidungsplatte (7) zu markieren.

6. Fensterverkleidungseinbausatz nach Anspruch 5, wobei der zweite Satz von Anzeigemitteln als Öffnungen (34a, 34b, 34c) in dem Linealelement (3) ausgebildet ist.

7. Fensterverkleidungseinbausatz nach einem der Ansprüche 2 bis 6, wobei das Winkelelement (2) ein vorderes Blatt (2a) und ein hinteres Blatt (2b) umfasst und das Linealelement (3) zwischen dem vorderen Blatt (2a) und dem hinteren Blatt (2b) eingesetzt ist.

8. Fensterverkleidungseinbausatz nach Anspruch 7, wobei das vordere Blatt (2a), das zweite Blatt (2b) und/oder das Linealelement (3) Mittel zum Erhöhen der Reibung zwischen denselben umfassen.

9. Fensterverkleidungseinbausatz nach einem der vorhergehenden Ansprüche, wobei eine gerade Spur (29) in Verbindung mit einem Ende (23a) der bogenförmigen Spur (23) bereitgestellt ist.

10. Fensterverkleidungseinbausatz nach Anspruch 9, wobei der Stift (33) des Linealelements (3) in der geraden Spur (29) aufgenommen ist, um zu ermöglichen, dass das Linealelement (3) eine Position einnimmt, in der ein Seitenrand (32) bündig mit dem zweiten Rand (22) des Winkelelements (2) abschließt.

11. Fensterverkleidungseinbausatz nach Anspruch 10, wobei das Linealelement (3) mit einem zweiten Satz von Anzeigemitteln (34a, 34b, 34c) versehen ist, die geeignet sind, Öffnungen auf der Verkleidungsplatte (7) zu markieren, vorzugsweise in Form von Öffnungen (34a, 34b, 34c) in dem Linealelement (3).

12. Fensterverkleidungseinbausatz nach Anspruch 2, wobei das Winkelelement (2) mit wenigstens einem lösbaren Halteelement (40) versehen ist, das, wenn es in dem Winkelelement (2) eingesetzt ist, einen ersten Winkelabstand der Spur (23) definiert und, wenn es von dem Winkelelement (2) gelöst ist, einen zweiten Winkelabstand der Spur (23) definiert, wobei der erste Winkelabstand vorzugsweise ein Teilabstand des zweiten Winkelabstands ist.

13. Fensterverkleidungseinbausatz nach Anspruch 12, wobei das Halteelement einen Stift (40) umfasst, der dazu ausgelegt ist, die Bewegung des Linealelements (3) in der Spur (23) zu begrenzen, wenn der Stift (40) in einer Öffnung (41) des Winkelelements (2) eingesetzt ist.

14. Verfahren zur Herstellung einer Fensterverkleidung, die einen Satz von Verkleidungsplatten (7), die zwischen einen Fensterrahmen (4) und eine Innenwand (5) einzupassen sind, umfasst, umfassend die folgenden Ablaufschritte:
a) Bereitstellen eines Messinstruments (1), das ein Winkelelement (2) und ein Linealelement (3) umfasst,
b) Bereitstellen eines Stifts (33) im Bereich eines Endrands des Linealelements (3), wobei der Stift (33) auf gleitende Weise in einer bogenförmigen Spur (23) des Winkelelements (2) aufgenommen ist,
c) Positionieren eines ersten Rands (21) des Winkelelements in Anlage an einer Innenseite des Fensterrahmens,
d) Drehen des Winkelelements (2) und des Linealelements (3) durch einen vorgegebenen Winkelabstand, der durch Enden (23a, 23b) der Spur (23) definiert ist, um wenigstens einen Seitenrand (32) des Linealelements (3) und einen zweiten Rand (22) des Winkelelements (2), der im Wesentlichen rechtwinklig zu dem ersten Rand (21) verläuft, in einem Winkel zueinander zu positionieren,
e) Halten der Winkelposition des Linealelements (3) relativ zu dem Winkelelement (2) und Überführen des Messinstruments (1) zu den Verkleidungsplatten (7) und
f) Schneiden der Verkleidungsplatten (7) entlang Linien (72, 71), die dem zweiten Rand (22) des Winkelelements (2) und dem einen Seitenrand (32) des Linealelements (3) entsprechen, so dass die Verkleidungsplatten (7) zwischen den Fensterrahmen (4) und die Innenwand (5) passen.

15. Verfahren nach Anspruch 14, ferner umfassend die folgenden Schritte:
Bereitstellen eines lösbaren Halteelements (40),
Einsetzen des Halteelements (40) in eine Öffnung des Winkelelements (2),
Definieren, mit der Position des Halteelements (40), eines ersten Winkelabstands der Spur (23) des Winkelelements (2), durch die das Linealelement (3) gedreht werden kann, und optional
Lösen des Halteelements (40) und dadurch Definieren eines zweiten Winkelabstands der Spur (23), durch die das Linealelement (3) gedreht werden kann.

## Revendications

1. Outil de mesure (1) d'habillage de fenêtre pour la préparation d'un habillage de fenêtre (7) à ajuster entre un châssis de fenêtre (4) et une paroi intérieure (5), comprenant
un élément d'angle (2) ayant un premier bord (21) conçu pour venir en butée contre le châssis de fenêtre (4) et un second bord (22) sensiblement perpendiculaire au premier bord (21) et incluant un chemin de roulement arqué (23), et
un élément gradué (3) ayant deux bords latéraux (31, 32) et deux bords d'extrémité opposés (34), et une broche (33) proche d'un bord d'extrémité, la broche (33) étant logée de façon coulissante dans le chemin de roulement arqué (23),
l'élément d'angle (2) et l'élément gradué (3) étant conçus pour tourner selon un intervalle angulaire prédéfini défini par les extrémités (23a, 23b) du chemin de roulement (23) dans l'élément d'angle (2) pour positionner au moins un bord latéral (32) de l'élément gradué (3) et le second bord (22) de l'élément d'angle (2) à un certain angle l'un par rapport à l'autre,
**caractérisé en ce que** la position angulaire de l'élément gradué (3) par rapport à l'élément d'angle (2) est définie uniquement par la position de la broche (33) dans le chemin de roulement arqué (23).

2. Kit d'installation d'habillage de fenêtre comprenant un outil de mesure d'habillage de fenêtre selon la revendication 1 et un jeu de panneaux d'habillage (7).

3. Kit d'installation d'habillage de fenêtre selon la revendication 2, dans lequel l'élément d'angle (2) est muni d'un premier ensemble de moyens d'indication (24, 25) conçus pour faire correspondre des marquages correspondants du panneau d'habillage (7), de préférence présents sous la forme d'ouvertures dans le panneau d'habillage (7).

4. Kit d'installation d'habillage de fenêtre selon la revendication 3, dans lequel ledit premier ensemble de moyens d'indication se présente sous la forme de broches faisant saillie (24, 25) destinées à correspondre avec des ouvertures (74, 75) dans le panneau d'habillage (7).

5. Kit d'installation d'habillage de fenêtre selon l'une quelconque des revendications 2 à 4, dans lequel l'élément gradué (3) est muni d'un second ensemble de moyens d'indication (34a, 34b, 34c) conçus pour marquer des ouvertures sur le panneau d'habillage (7).

6. Kit d'installation d'habillage de fenêtre selon la revendication 5, dans lequel ledit second ensemble de moyens d'indication se présente sous la forme d'ouvertures (34a, 34b, 34c) dans l'élément gradué (3).

7. Kit d'installation d'habillage de fenêtre selon l'une quelconque des revendications 2 à 6, dans lequel l'élément d'angle (2) comprend une plaque avant (2a) et une plaque arrière (2b) et l'élément gradué (3) est inséré entre la plaque avant (2a) et la plaque arrière (2b) .

8. Kit d'installation d'habillage de fenêtre selon la revendication 7, dans lequel la plaque avant (2a), la seconde plaque (2b) et/ou l'élément gradué (3) comprennent des moyens destinés à augmenter le frottement entre eux.

9. Kit d'installation d'habillage de fenêtre selon l'une quelconque des revendications précédentes, dans lequel un chemin de roulement droit (29) est disposé relié à une extrémité (23a) du chemin de roulement arqué (23) .

10. Kit d'installation d'habillage de fenêtre selon la revendication 9, dans lequel la broche (33) de l'élément gradué (3) est logée dans le chemin de roulement droit (29) pour permettre à l'élément gradué (3) de prendre une position dans laquelle un bord latéral (32) est aligné avec le second bord (22) de l'élément d'angle (2).

11. Kit d'installation d'habillage de fenêtre selon la revendication 10, dans lequel l'élément gradué (3) est muni d'un second ensemble de moyens d'indication (34a, 34b, 34c) conçus pour marquer des ouvertures sur le panneau d'habillage (7), de préférence sous la forme d'ouvertures (34a, 34b, 34c) dans l'élément gradué (3).

12. Kit d'installation d'habillage de fenêtre selon la revendication 2, dans lequel l'élément d'angle (2) est muni d'au moins un élément de restriction amovible (40) qui, lorsqu'il est inséré dans l'élément d'angle (2), définit un premier intervalle angulaire du chemin de roulement (23), et lorsqu'il est retiré de l'élément d'angle (2), définit un second intervalle angulaire du chemin de roulement (23), le premier intervalle angulaire étant de préférence un sous-intervalle du second intervalle angulaire.

13. Kit d'installation d'habillage de fenêtre selon la revendication 12, dans lequel l'élément de restriction comprend une broche (40), conçue pour limiter le déplacement de l'élément gradué (3) dans le chemin de roulement (23), lorsque la broche (40) est insérée dans une ouverture (41) de l'élément d'angle (2).

14. Procédé de préparation d'un habillage de fenêtre comprenant un jeu de panneaux d'habillage (7) à ajuster entre un châssis de fenêtre (4) et une paroi intérieure (5), comprenant la séquence d'étapes suivantes :
a) la fourniture d'un outil de mesure (1) comprenant un élément d'angle (2) et un élément gradué (3),
b) la fourniture d'une broche (33) proche d'un bord d'extrémité de l'élément gradué (3), ladite broche (33) étant logée de façon coulissante dans un chemin de roulement arqué (23) de l'élément d'angle (2),
c) le positionnement d'un premier bord (21) de l'élément d'angle en butée contre un côté intérieur du châssis de fenêtre,
d) la rotation de l'élément d'angle (2) et de l'élément gradué (3) selon un intervalle angulaire prédéfini défini par des extrémités (23a, 23b) du chemin de roulement (23) pour positionner au moins un bord latéral (32) de l'élément gradué (3) et un second bord (22), sensiblement perpendiculaire au premier bord (21), de l'élément d'angle (2), à un certain angle l'un par rapport à l'autre,
e) le maintien de la position angulaire de l'élément gradué (3) par rapport à l'élément d'angle (2), et le transfert de l'outil de mesure (1) aux panneaux d'habillage (7), et
f) la découpe des panneaux d'habillage (7) le long de lignes (72, 71) correspondant au second bord (22) de l'élément d'angle (2) et au bord latéral (32) de l'élément gradué (3), de sorte que les panneaux d'habillage (7) s'ajustent entre le châssis de fenêtre (4) et la paroi intérieure (5).

15. Procédé selon la revendication 14, comprenant en outre les étapes suivantes
la fourniture d'un élément de restriction amovible (40),
l'insertion de l'élément de restriction (40) dans une ouverture de l'élément d'angle (2),
la définition, avec la position de l'élément de restriction (40), d'un premier intervalle angulaire du chemin de roulement (23) de l'élément d'angle (2) selon lequel l'élément gradué (3) peut être tourné, et en option,
le retrait de l'élément de restriction (40), ce qui permet la définition d'un second intervalle angulaire du chemin de roulement (23) selon lequel l'élément gradué (3) peut être tourné.
